# EUROPEAN PATENT APPLICATION

(11) **EP 2 193 709 A2**
(43) Date of publication of application: **09.06.2010**
(21) Application number: 09460055.8
(22) Date of filing: 03.12.2009
(51) Int. Cl.: A01M 7/00

(54) **Fan assembly for a spraying machine**

(30) Priority: 04.12.2008 PL 38669008
(71) Applicant: Instytut Sadownictwa i Kwiaciarstwa Im. Szczepana Pieniazka, 96-100 Skierniewice (PL)
(72) Inventor: Doruchowski, Grzegorz, 96-100 Skierniewice (PL); Jedrachowicz, Tadeusz, 96-100 Skierniewice (PL); Sujka, Andrzej, 96-116 Debowa Góra (PL); Poszwinski, Krzysztof, 96-100 Skierniewice (PL); Holownicki, Ryszard, 96-100 Skierniewice (PL)
(74) Representative: Pankowski, Jacek

(57) **Abstract**

A fan assembly for a spraying machine, usable in orcharding spraying machines for effecting spraying in orchards.

The fan assembly of the invention, on a wheeled chassis, in addition to a tank (11) with the associated assemblies, has two frames mounted spaced apart along the symmetry axis of a supporting frame (9): a flat broken frame (1) behind a fan (5) and a flat front frame (2) in front of the fan (5). The fan (5) is a radial fan and it has at the inlet a multi-segment diaphragm choke valve (5.3) and a solid collector outlet connection port (5.5) with a rotational plate choke valve (5.7), mounted to a shaft (5.8.3). Both choke valves (5.3) and (5.7) are powered by electric motors (5.4) and (5.8). The assembly is constructively capable to cooperate with an electronic control system that operates suitably to different requirements of diverse protection program schemes.

## Description

It is the object of this invention to provide a fan assembly for a spraying machine, usable in orcharding spraying machines for effecting spraying in orchards.

A fan assembly for an orcharding spraying machine is known from the Polish patent specification No. PL 162198, said fan assembly being constituted by a radial fan rotor seated on a shaft of a drive transmission mounted in the spraying machine; a fan housing with eight outlet connection ports, four of them on left and right side respectively; two vertical beams attached releasingly to a spraying machine frame, to which beams the housing is attached; fixed rail brackets attached to the vertical beams at the top and at the bottom; movable rail brackets releasingly attached to the fixed brackets so that both kinds of brackets form a geometrical shape of a trapezoid with a larger parallel side at the top. To the outlet connection ports, resilient air ducts are attached, said air ducts ending in throats in the lumen of which atomizers connected by piping are mounted, inside the resilient ducts, with a collecting pipe for the liquid to be sprayed, and the throats are attached to movable rail brackets. The mounting elements constitute slide clamps.

A fan assembly for a spraying machine is known from the Polish patent specification No. PL 188291, said assembly being provided with an axial fan of a reverse thrust, with a bowl on the pumping side which closes the head end of the fan housing. On the bowl, outlet connection ports are positioned, preferably ten of them, to which resilient air ducts with throats are attached in the lumen of which atomizers for the liquid to be sprayed are seated. The assembly has two angular poles of considerably longer vertical legs than the horizontal legs, attached on the left side and on the right side of the spraying machine to a horizontal link secured to the supporting frame of the spraying machine. The angular poles on the vertical legs are provided with longitudinal apertures intended to mount, on the poles, short mounting rails with longitudinal through apertures by means of linking elements and channel caps; where the mounting rails are arbitrarily positioned on the poles correspondingly to the longitudinal apertures so as, with the channel caps put from the top on the mounting rails, to enable inserting screws through the apertures in the caps and through the longitudinal through apertures in the poles and in the mounting rails, which screws are then being locked with nuts. The throats are secured to the mounting rails with the use of longitudinal apertures therein. The mounting rails can be rotated one full turn on the pole plane, with any arbitrarily selected value of the grade increase rate within this turn.

The fan assembly for a spraying machine according to the invention is **characterized in that** within the supporting frame of the chassis of the spraying machine, behind the tank of the liquid to be sprayed, two frames are attached vertically, said frames being spaced apart along with the longitudinal symmetry axis of the supporting frame of the spraying machine chassis: at the end of the fan housing a flat broken frame, open at both sides, and in front of the fan a flat front frame; and between the frames the housed radial fan is provided at the inlet with a multi-segment diaphragm choke valve and at the outlet with a solid collection connector outlet port which has a contour of a base-up turned truncated pyramid within which a rotatable plate choking valve is attached to a shaft inserted and supported in bearings in two opposite connection port walls; while the outlet of the outlet connection port is closed from the top with a cover of a contour of a two-pitch roof with cylindrical projections secured in openings in the two planes of the roof, preferably sixteen of them, to which resilient air ducts for right and left sides of the spraying machine are to be attached. The flat broken frame, which is opened at both sides, constitutes a releasable hinged link of the lower frame segment with the upper frame segment, where the lower frame segment is composed of two parallel posts and a horizontal trapezoid link which is attached by means of a diverging ear on a link with a plate ear on an angular tie secured to the supporting construction of the spraying machine chassis; and moreover beneath the trapezoid link additionally two broken cross-bars are positioned in a spaced apart configuration that couple the posts, said cross-bars constituting basis for securing a junction box, where the posts at the top are provided with slide bearing sleeves, and the upper frame segment also has two posts connected with two spaced apart links the lower one of which is fixedly provided with two linking legs, and through the opening in these arms linking bolts with heads are passed and slidably seated in the slide bearing sleeves of the lower frame segment and locked against shift. The front flat frame is composed of two parallel posts coupled by two spaced apart horizontal upper and intermediate bars, where the posts at the bottom are fixedly provided with linking extension legs, perpendicular to the posts; where on these extension legs, from the top, at their ends, a linking angle bar is positioned and secured thereto by screwing with the use of screw elements, i.e. washer-protected screws with nuts, to flanges of quadrangular mounting extension bars, coupled with the mounting frame of the radial fan, said frame being engaged with the supporting structure of the spraying machine chassis. The diaphragm multi-segment choke valve is powered by means of an electric motor extended between the diverging ear on the two-part housing of the choke valve and the angular lever coupled with a ring in the cylindrical part of the two-part housing of the choke valve, to which motor first ends of simple levers are hingedly secured, while the second ends thereof are also hingedly connected with shaped levers while the latter ones with their second ends are connected with movable plates of the choke valve so formed that the outer edges thereof during movement of two-stage arranged plates define a circular contour of a diameter varying between a maximum and minimum value. The plate rotational choke valve positioned in the area of the solid outlet collector connection port is also powered by an electric motor extended between the ear secured outside to the shaft with the choke valve and the diverging ear on the flange of the housing of the radial fan.

Providing the fan assembly with a multi-segment diaphragm choke valve makes it possible to control in a smooth manner, within a predetermined range, the output of the fan, and the rotational plate choke valve in a collector solid outlet connection port enables division, in a controlled manner, of the fan output into the left and right sides of the spraying machine. It is also possible to cut off entirely the air supply to the air ducts of the right or left side of the spraying machine which is sometimes required by the orchard spraying schemes.

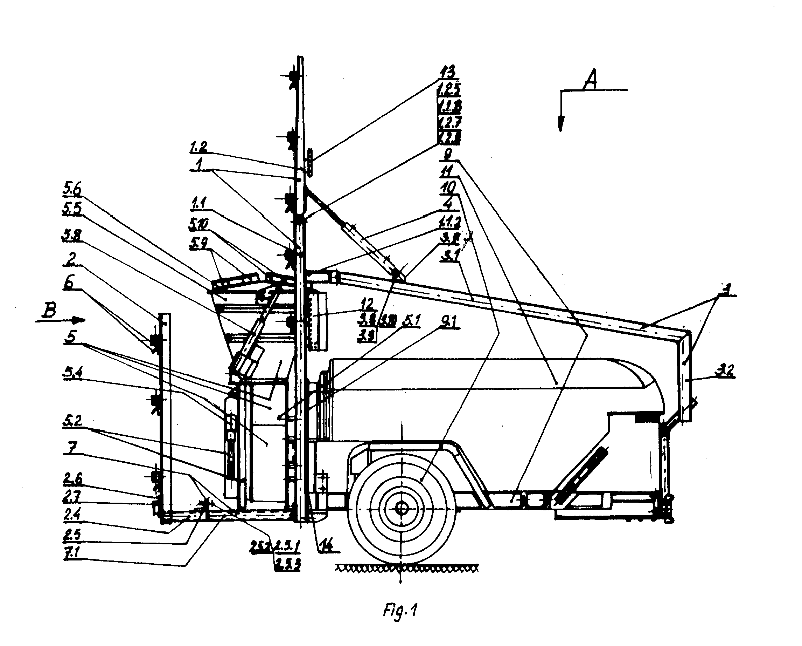

The object of this invention is explained in detail in an embodiment in the drawing, where
Fig. 1 illustrates a spraying machine with a fan assembly in a side view;

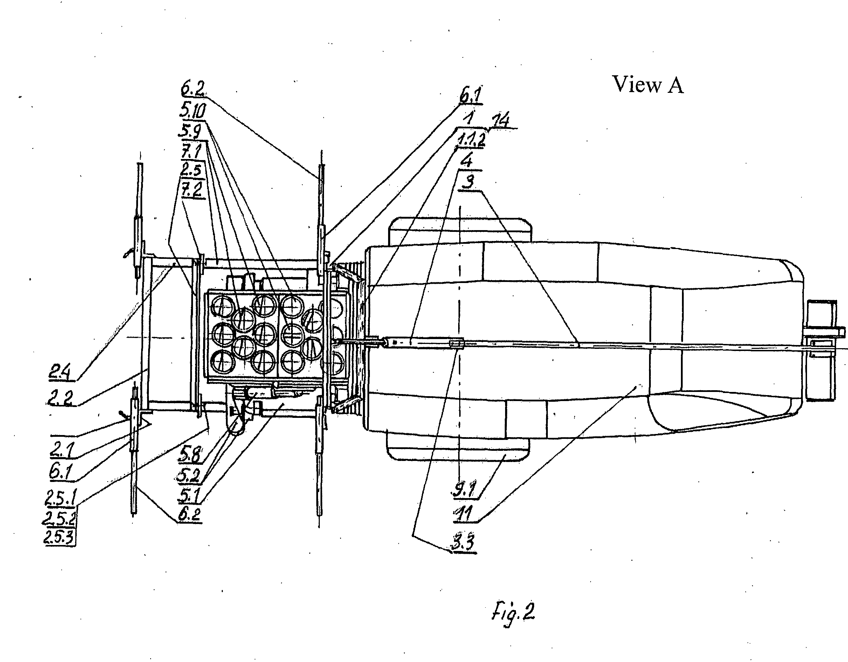

Fig. 2 illustrates a top view indicated as A in Fig. 1;

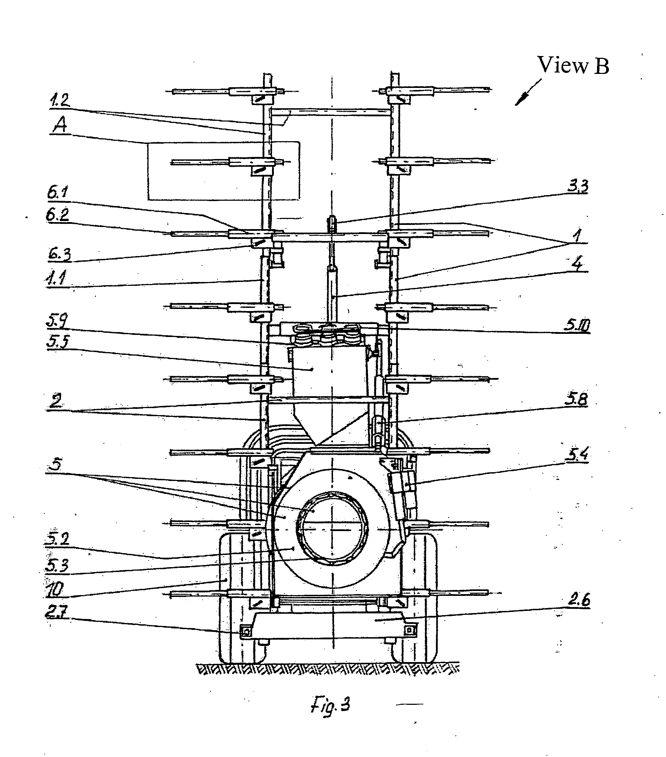

Fig. 3 illustrates a rear view indicated as B in Fig. 1;

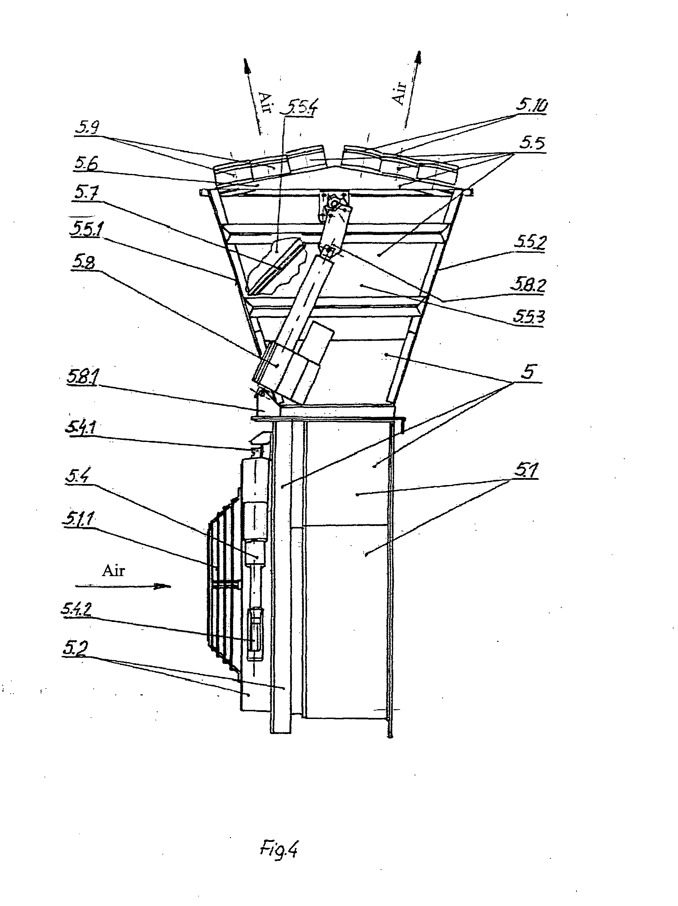

Fig. 4 illustrates a radial fan with a housed inlet and with an outlet connection port in a side view;

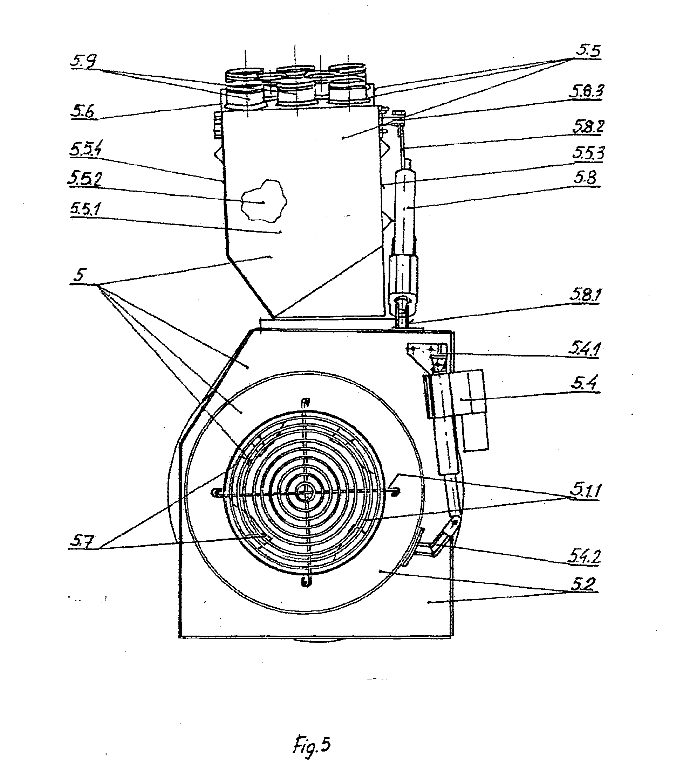

Fig. 5 illustrates the same fan in a front view;

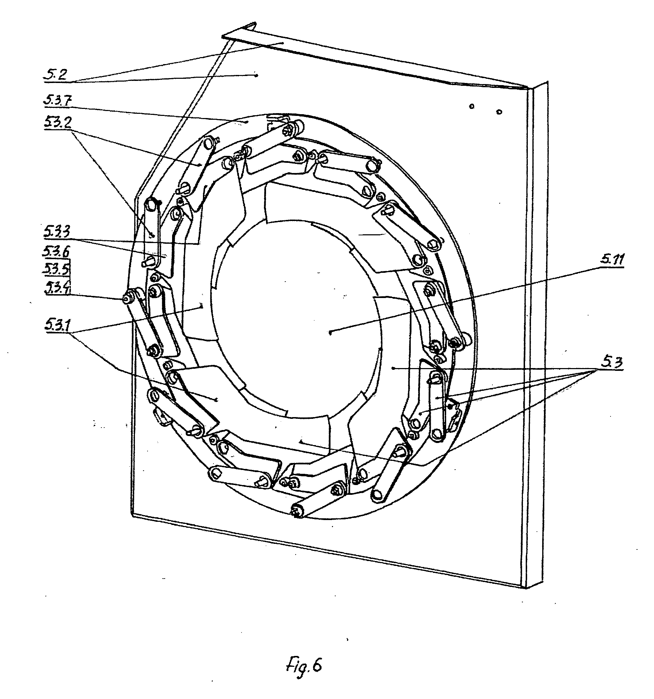

Fig. 6 illustrates a front view of a multi-segment diaphragm choke valve in an open state;

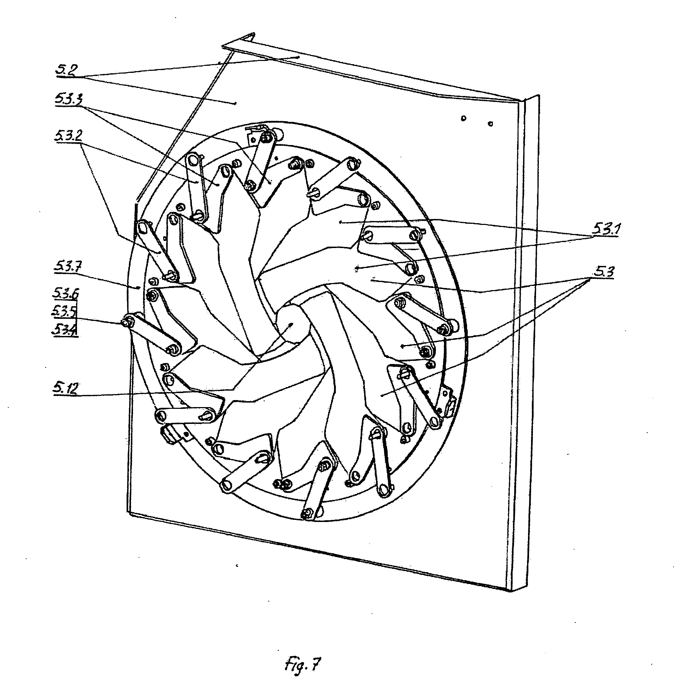

Fig. 7 illustrates the same multi-segment diaphragm choke valve in a front view in a maximum close state;

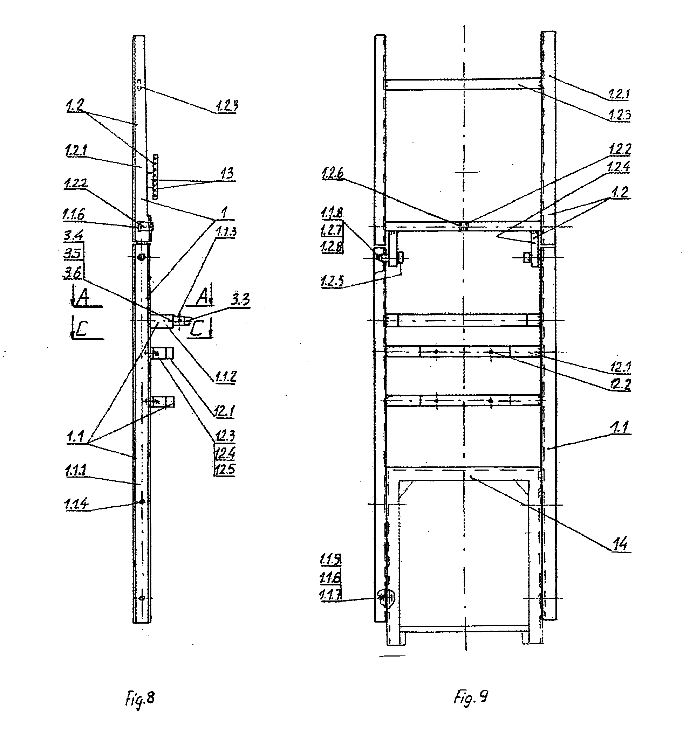

Fig. 8 illustrates a side view of a flat broken frame;
Fig. 9 illustrates the same frame in a front view;

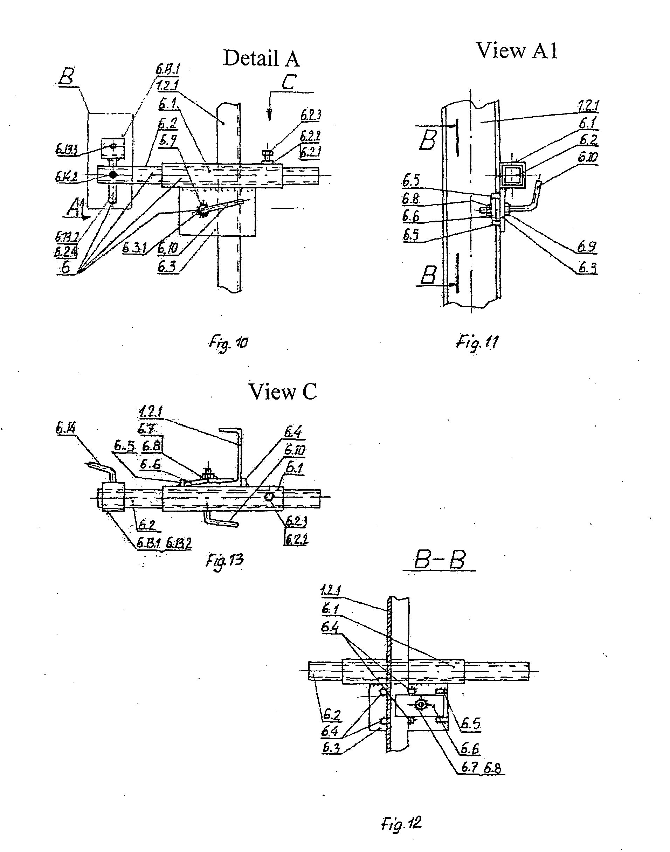

Fig. 10 illustrates a detail A indicated in Fig. 3, showing a front view of construction of a mounting nod attached to a frame post;
Fig. 11 illustrates the mounting nod in a side view, indicated as A1 in Fig. 10 showing in more detail the way it is attached to the frame post;
Fig. 12 illustrates the mounting nod in a B-B section indicated in Fig. 11, showing also the way it is attached but in another view;
Fig. 13 illustrates the mounting nod in a top view, indicated as C in Fig. 10, showing locking of the mounting nod on the frame post;

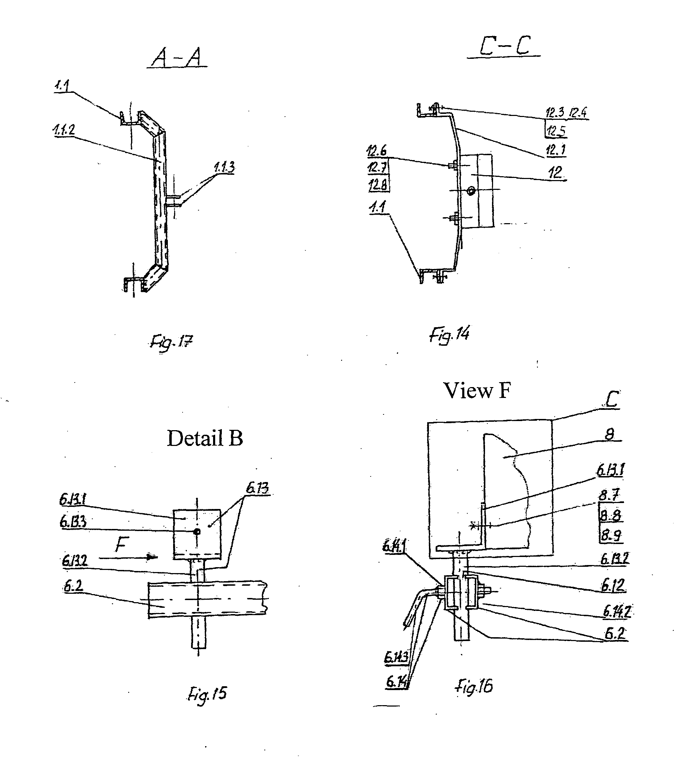

Fig. 14 illustrates in a C-C section indicated in Fig. 8 a cross-section of the flat broken frame, showing the broken cross-bar that couples the frame posts;
Fig. 15 illustrates a detail B indicated in Fig. 10, showing a mounting element;
Fig. 16 illustrates the same mounting element in a view F indicated in Fig. 15, showing this element in a front view with a schematically marked attached holder for ducts and atomizers;
Fig. 17 illustrates the flat broken frame in a cross-section indicated as A-A in Fig. 8, showing the trapezoid link that engages the frame posts;

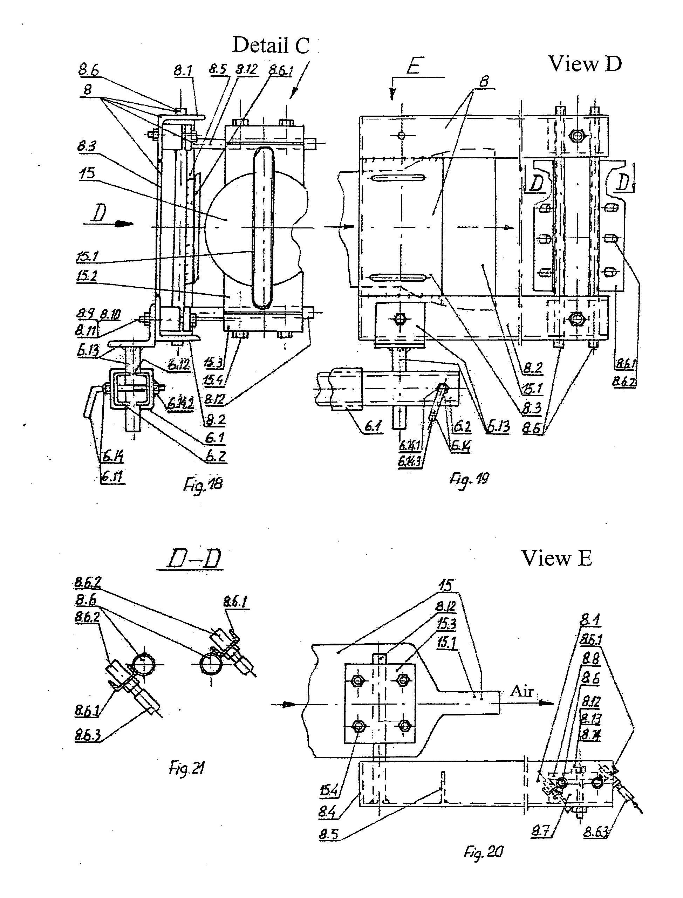

Fig. 18 illustrates a detail C indicated in Fig. 16, showing in a front view the holder for the air duct and atomizers, along with these elements;
Fig. 19 illustrates the same holder for the air duct and atomizers in a view D indicated in Fig. 18, showing the holder in another view;
Fig. 20 illustrates the holder for the air duct and atomizers in a top view indicated as E in Fig. 19;
Fig. 21 illustrates in a local D-D section indicated in Fig. 19, showing attachment of the channel coupling elements on the mounting bars, where on the coupling elements liquid atomizers are seated;

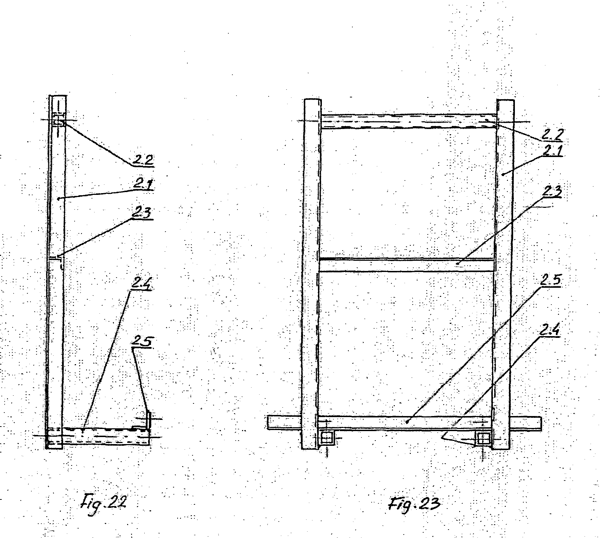

Figs. 22 and 23 illustrate in a side and front views the flat front frame; and

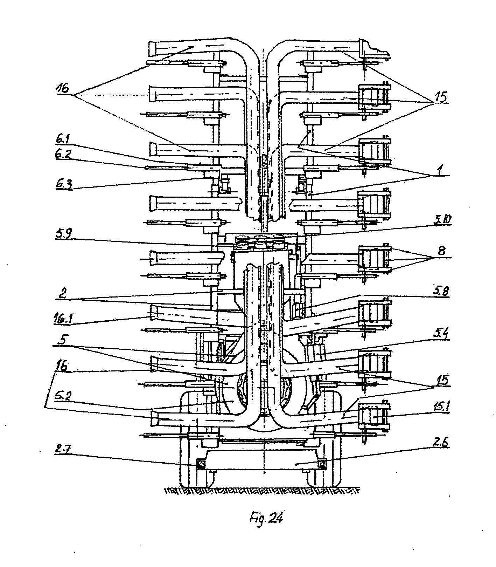

Fig. 24 illustrates in a rear view the spraying machine along with ducts.

The fan assembly according to the invention is constructed of several elements combined in a logical unit which is composed of: a flat broken frame 1, opened on both sides, attached behind a radial fan 5 to a mounting frame 14 of the fan, in the vicinity of a tank 1 of the liquid to be sprayed; a flat front frame 2 attached in front of the radial fan 5 to two mounting extension bars 7 attached to a supporting frame 9 of the spraying machine chassis; a radial fan 5 provided at the inlet with a multi-segment diaphragm choke valve 5.3 and at the outlet with a collection solid connection port 5.5, in the area of which a rotatable plate choke valve 5.7 is secured; a spraying machine chassis with a supporting frame 9 supported on supporting road wheels 10 and with a liquid tank 11 housed thereon; an angular tie 3, on one side attached to the chassis construction and on the other side hingedly connected to the flat broken frame 1 by means of a diverging ear 1.1.3 of the frame and a plate ear 3.3 of the tie 3, through which ears a bolt 3.4 is inserted, said bolt being protected by a washer 3.5 and a cotter pin 3.6; a hydraulic cylinder 4 extended between the angular tie 3 and an upper frame segment 1.2 of the flat broken frame 1; mounting nods 6, preferably sixteen of them, eight at each of the left side and right side of the spraying machine; a holder 8 for air ducts 15 at the right side and 16 at the left side of the spraying machine; and atomizers 8.6.2 for the liquid to be sprayed; a junction box 12 for electric cables of the control unit, attached to two broken cross-bars 12.1 that couple posts 1.1.1 of the flat broken frame 1. To an upper frame segment 1.2 of the flat broken frame 1 a retaining element 13 for electric cables of the control unit is secured. The flat broken frame 1 is consisted of a bottom frame segment 1.1 and an upper frame segment 1.2 hingedly connected by means of two bolts 1.2.5 with heads passed through apertures in linking legs 1.2.4 of the upper frame segment 1.2 and inserted into slide bearing sleeves 1.1.8 seated on the upper part of the posts 1.1.1 of the bottom frame segment 1.1 and protected with washers 1.2.8 and nuts 1.2.7. The bottom frame segment 1.1 has two posts 1.1.1 coupled with a horizontal trapezoid link 1.1.2 under which there are attached spaced apart two broken cross-bars 12.1 that additionally stiffen the bottom frame segment 1.1 and are used to secure the junction box 12 by means of mounting apertures 12.2 as well as bolts 12.6, washers 12.8 and nuts 12.7. The broken cross-bars 12.1 are screwed to the posts 1.1.1 with bolts 12.3 with washers 12.5 and nuts 12.4. The posts 1.1.1 are provided with apertures 1.1.4 for screwing to the mounting frame 14 of the radial fan 5 with the use of bolts 1.1.5 with washers 1.1.6 and nuts 1.1.7. The upper frame segment 1.2 also has two posts 1.2.1 coupled with horizontal links: bottom link 1.2.2 and top link 1.2.3. To the bottom link 1.2.2 there are attached perpendicularly two linking legs 1.2.4, and along with the symmetry axis at the opposite side to the linking legs 1.2.4, also a diverging ear 1.2.6 for connection to a hydraulic cylinder 4. The flat front frame 2 is composed of two posts 2.1 coupled with horizontal bars: upper bar 2.2 and intermediate bar 2.3, and at the bottom of the posts 2.1 there are fixedly attached linking extension bars 2.4 connected with an angular linking bar 2.5 the vertical shelf of which during assembling contacts the flanges 7.2, preferably quadrangular flanges, of bars 7.1 of the mounting extension bars 7. To the supporting structure of the spraying machine, an angular tie 3 is attached by its smaller leg 3.2, the larger leg 3.1 of said tie reaching, above the tank 11 for the liquid to be sprayed, the lower frame segment 11 of the flat broken frame 1, and it is hingedly attached therewith by means of the diverging ear 1.1.3 secured to the trapezoid horizontal link 1.1.2 and the plate ear 3.3 secured to an end of the long leg 3.1. of the angular tie 3 and the bolt 3.4, washer 3.5 and cotter pin 3.6. On the long leg 3.1 the diverging ear 3.7 is secured, and between the latter and the diverging ear 1.2.6 on the lower horizontal link 1.2.2 of the upper frame segment 1.2, a hydraulic cylinder 4 is extended. In the ear 3.7 the cylinder of the hydraulic cylinder 4 is mounted hingedly by means of a bolt 3.8, washer 3.9 and cotter pin 3.10. The radial fan 5 consists of a cylindrical housing 5.1 of the rotor; a two-part housing 5.2 of an inlet multi-segment diaphragm choke valve 5.3, on which at the front a bar shield 5.1.1 of the inlet is housed, and at the outlet a solid collector connecting port 5.5 is positioned, said port having a contour of a truncated pyramid the front 5.5.1 and rear 5.5.2 walls of which are not additionally stiffened, and the side walls 5.5.3 and 5.5.4 are stiffened with angular elements and through these walls a shaft 5.8.3 is inserted at the top and seated in bearings in these walls, and on the shaft a plate rotational choke valve 5.7 is secured. The outlet connection port 5.5 is closed at the top with a cover 5.6 having a contour of a two-pitch roof the both planes of which are provided with cylindrical projections 5.9 for mounting resilient air ducts 15 for the right side of the spraying machine and with cylindrical projections 5.10 for mounting resilient air ducts 16 for the left side of the spraying machine. The mechanism for opening and closing the multi-segment diaphragm choke valve 5.3 is powered by an electric motor 5.4 extended between the diverging ear 5.4.1 on the housing 5.2 of the choke valve 5.3 and the angular lever 5.4.2 which is coupled with the ring 5.3.7 and passed through the cylindrical part of the two-part housing 5.2. The multi-segment diaphragm choke valve 5.3 at the inlet operates similarly as a camera aperture diaphragm: circumferentially positioned movable plates 5.3.1 of the choke valve 5.3 in two layers are suitably connected by means of simple levers 5.3.2 and shaped levers 5.3.3, and first ends of the simple levers 5.3.2 are connected with a ring 5.3.7 built into the housing, said ring being able to be rotated which causes a change in the arrangement of the plates 5.3.1 so that the inlet opening 5.11 is maximally opened or the inlet opening 5.12 is maximally closed. The connections of the levers 5.3.2 and 5.3.3 with the plates 5.3.1 and the ring 5.3.7 are made with the use of bolts 5.3.4 protected by washers 5.3.6 and nuts 5.3.5. The plate rotational choke valve 5.7 is also powered by an electric motor 5.8 extended between the ear 5.8.2 connected with the shaft 5.8.3 and the diverging ear 5.8.1 on the flange of the housing 5.1 of the rotor. The fan assembly is provided with sixteen mounting nods 6 releasingly mounted on the posts 1.1.1 of the flat broken frame 1 and on the posts 2.1 of the flat front frame 2, and on the latter six mounting modes are attached and spaced apart, where on the flat broken frame 1 ten nods are attached in groups: six on the upper frame segment 1.2 and four on the lower frame segment 1.1. The mounting nod 6 is constructed of pipe guide 6.1, a pipe element 6.2 slidable therein, a mounting plate 6.3 welded to the pipe guide 6.2. On the mounting plate 6.3 at one side spaced apart guiding pins 6.4 are mounted so as to enable free movement between them of the shelf of the channel post of each of the frames with clearance, i.e. frames 1 and 2, and behind the two pairs of guiding pins 6.4 an opening 6.3.1 is made. At the side with the pins 6.4, to the mounting plate 6.3 bar stops 6.5 are welded in the close vicinity of the small edge, and between them a bent plate clamp 6.6 is inserted with an opening 6.7 and welded nut 6.8 through which by the openings 6.3.1 and 6.7 a screw 6.9 is screwed with a head welded to the head of the bent clamp 6.10. After the mounting nod 6 is positioned on the post shelf of any of the frames 1 or 2 so that the guiding pins 6.4 grasp the shelf, at the inner side of the post of the frames 1 and 2 a plate bend clamp 6.6 is applied and the screw 6.9 is screwed in with its head provided with the bent clamp 6.10 with the use of which the mounting nod suitably positioned is fully screwed and secured on the posts of the frames 1 and 2. Position of the slidable pipe element 6.2 in the pipe guide 6.1 is determined by means of the screw 6.2.3 screwed into the nut 6.2.2 welded over the opening 6.2.1 in the pipe guide 6.1. The other end of the slidable pipe element 6.2 is vertically split defining a slot 6.12, and behind the slot it has a through hole 6.2.4 into which the bolt 6.13.2 of the mounting element 6.13 is inserted. To the angular element 6.13.1 with the opening 6.13.3 the holder 8 is secured with the screw 8.9, washer 8.11 and nut 8.10, where in the holder 8 the air ducts 15 and 16 as well as atomizers 8.6.2 are secured. Screwing up of the bolt 6.13.2 is obtained by means of a screw clamp 6.14 constituted by a screw 6.14.1 with a welded bent grip 6.14.3. The screw is screwed into the nut 6.14.2 welded over the opening 6.11 bored coaxially in both opposite walls of the slidable element 6.2 in the area of the crossing with the slot 6.12. The holder 8 for air ducts and atomizers is a constructive subassembly with a U (channel) contour the shelves of which are two angular elements: the upper one 8.1 and the lower one 8.2 coupled in the plane of the shelves with a connection metal sheet 8.3 and closed at one end with a closing metal sheet 8.4. Inside, between the horizontal shelves of the angular elements 8.1 and 8.2, along the free edge of the connecting metal sheet 8.3 a flat partition 8.5 is mounted in, and behind the latter in the shelves of the angular elements 8.1 and 8.2, closer to their free ends, in the tandem opening therein two mounting bars 8.6 are inserted and locked against shift at the top and at the bottom by means of two two-seat blocks 8.7 that house in their recesses the bars 8.6 and abut against the vertical shelves of the angular elements 8.1 and 8.2 and are secured with cap clamps 8.8 that also house in their recesses the bars 8.6 and are coupled with screws 8.12 inserted through the openings in the cap clamps 8.8, two-seat blocks 8.7 and vertical shelves of the angular elements 8.1 and 8.2, as well as secured with washers 8.13 and nuts 8.14. To the bars 8.6 channel mounting elements 8.6.1 for atomizers 8.6.2 are secured and spaced apart in openings of the intermediate parts of the channel mounting elements 8.6.1. The bars 8.6 are positioned so that after the cap clamps 8.8 are loosened the axis of the atomizers 8.6.2 assumes a desired orientation. At the other end of the holder 8, opposite the bars 8.6, two mounting bars 8.12 are fixedly secured perpendicularly to the connecting metal sheet 8.3 in the vicinity of the closing metal sheet 8.4 and closely beneath the horizontal shelves of the angular elements 8.1 and 8.2. To the mounting bars 8.12 terminals 15.1 and 16.1 of the air ducts 15 are mounted for the right side of the spraying machine and 16 for the left side of the spraying machine, by means of plinths 15.2 and caps 15.3 with suitable recesses in both elements to house the mounting bars 8.12 and secured with screws 15.4. To the terminals 15.1 and 16.1 resilient air ducts 15 and 16 are secured to make a connection to the radial fan 5.

The operation of the assembly is as follows. The assembly is associated with a suitable electronic control unit which uses protection programs that benefit from the advantages of the construction of the inventive assembly, which means that it controls, if needs arises, the multi-segment diaphragm choke valve 5.3 to open or close it, correspondingly to the amount of required air, as well as controls the plate rotatable choke valve 5.7 to direct the air stream of a required output to the right or left side of the spraying machine, including cutting off entirely the air flow at a specific side of the spraying machine.

## Claims

1. A fan assembly for a spraying machine, provided with a radial or axial fan, a framework on which air ducts are extended and secured, atomizers of the liquid to be sprayed positioned in the lumen of the outlet terminals of the air ducts, which is in the air streams; a wheeled chassis on which a tank of the liquid being sprayed, the fan and the framework are mounted; devices for transferring energy from a tractor to the fan, **characterized in that** in the area of the supporting frame (9) of the chassis of the spraying machine, behind the tank (11) of the liquid being sprayed, two frames are mounted vertically and spaced apart along the longitudinal symmetry axis of the supporting frame (9) of the chassis of the spraying machine: at the end of the housing of the radial fan (5) a flat broken frame (1), open at two sides, and in front of the radial fan (5) a flat front frame (2), where between these frames the housed radial fan (5) is provided at the inlet with a multi-segment diaphragm choke valve (5.3), and at the outlet with a solid collector outlet connection port (5.5) in the area of which a plate rotational choke valve (5.7) is mounted to a shaft (5.8.3), where the flat broken frame (1) which is open at two sides constitutes a releasable hinged connection of a lower frame segment (1.1) and an upper frame segment (1.2), and the lower frame segment (1.1) is composed of two parallel posts (1.1.1) and a horizontal trapezoid link (1.1.2) which is connected by means of a diverging ear (1.1.3) on the link with a plate ear (3.3) on an angular tie (3) secured to the supporting structure of the chassis of the spraying machine, and moreover beneath the trapezoid link (1.1.2) additionally two broken cross-bars (12.1) are spaced apart that couple the posts (1.1.1) and constitute basis for mounting a junction box (12), where the posts (1.1.1) at the top are provided with slide bearing sleeves (1.1.8) and the upper frame segment (1.2) also has two posts (1.2.1) connected by two spaced apart links (1.2.2) and (1.2.3), the lower link (1.2.2) is fixedly provided with two linking legs (1.2.4) through the openings in which connecting bolts (1.2.5) with heads are inserted and slidably seated in slide bearing sleeves (1.1.8) of the lower frame segment (1.1) and locked against shift, and moreover the flat front frame (2) is composed of two parallel posts (2.1) coupled by two spaced apart horizontal bars, the upper bar (2.2) and the intermediate bar (2.3), where the posts (2.1) are provided fixedly at the bottom with linking extensions (2.4) perpendicularly to the posts (2.1), whereon these extensions from the top and at their ends a connecting angular bar (2.5) is positioned and secured which is then screwed with screw elements, which is screws (2.5.1) protected by washers (2.5.2) and nuts (2.5.3) to quadrangular flanges (7.2) of the mounting extensions (7), coupled with the mounting frame (14) of the radial fan (5), associated with the supporting construction of the chassis of the spraying machine, and moreover the multi-segment diaphragm choke valve (5.3) is powered by means of an electric motor (5.4) extended between the diverging ear (5.4.1) on the two-part housing (5.2) of the choke valve (5.3) and the angular lever (5.4.2) coupled with the ring (5.3.7) in the cylindrical part of the two-part housing (5.2) of the choke valve (5.3) to which motor first ends of the simple levers (5.3.2) are hingedly attached, the other ends being also hingedly connected with shaped levers (5.3.3) which are in turn connected by their other ends with movable plates (5.3.1) of the choke valve (5.3) so shaped that the outer edges thereof during movement of the plates (5.3.1) arranged in two layers define a circular contour of the aperture (5.11) or (5.12) of a different diameter included within a range of a maximum and a minimum, where the plate rotational choke valve (5.7) positioned in the area of the solid outlet collector connection port (5.5) is also powered by an electric motor (5.8) extended between the ear (5.8.2) secured outside to the shaft (5.8.3) with the choke valve (5.7) and the diverging ear (5.8.1) on the flange of the housing (5.1) of the radial fan (5).

2. A fan assembly for a spraying machine according to claim 1, **characterized in that** the solid collector outlet connection port (5.5) has a contour of a truncated pyramid positioned base-up, and the outlet of the outlet connection port (5.5) is closed from the top by a cover (5.6) having a contour of a two-pitch roof with cylindrical projections (5.9) and (5.10) mounted in openings in both planes of the cover, preferably sixteen projections, for mounting thereon resilient air ducts (15) and (16) for the right and left sides of the spraying machine.

3. A fan assembly for a spraying machine according to claim 1, **characterized in that** the shaft (5.8.3) with the plate rotational choke valve (5.7) is passed and supported in bearings through two opposite walls (5.5.3) and (5.5.4) of the connection port (5.5), said walls being stiffened with angular elements.
